# EUROPEAN PATENT SPECIFICATION

(11) **EP 4 139 978 B1**
(45) Date of publication and mention of the grant of the patent: **31.07.2024**
(21) Application number: 20721178.0
(22) Date of filing: 20.04.2020
(51) Int. Cl.: H01M 8/023, H01M 8/0258, H01M 8/0204, H01M 8/0247, H01M 8/241

(54) **FLUID GUIDING ASSEMBLY FOR FUEL CELL**
FLUIDFÜHRUNGSANORDNUNG FÜR BRENNSTOFFZELLE
ASSEMBLAGE DE GUIDAGE DE FLUIDE POUR PILE À COMBUSTIBLE

(43) Date of publication of application: 01.03.2023
(73) Proprietor: EH Group Engineering AG, 1260 Nyon (CH)
(72) Inventor: MATIAN, Mardit, 1197 Prangins (CH)
(74) Representative: Troesch Scheidegger Werner AG
(86) International application number: PCT/EP2020/060997
(87) International publication number: WO 2021/213613

(56) References cited:
- DE-A1- 102018 203 406
- US-A1- 2014 178 785
- US-A1- 2016 260 987
- US-A1- 2019 221 866

## Description

### TECHNICAL FIELD OF THE INVENTION

The current invention relates to a fluid guiding assembly, in particular for guiding gases and liquids in fuel cells.

### DESCRIPTION OF THE RELATED ART

Fuel cells are one of the main candidates to replace power generators that are operating based on fossil fuels and they can be used in several applications, including mobile and stationary applications. One such fuel cell is the Proton Electrolyte Membrane (PEM) fuel cell that operates at 70-80 °C. Each cell in a stack assembly comprises an electrolyte, usually a thin membrane, a catalyst layer on the anode side and a catalyst layer on the cathode side, wherein the assembly is called a Membrane Electrode Assembly (MEA). The fuel, usually hydrogen and the oxidant, usually air, pass through each layer where the electro-chemical reaction occurs to produce electricity with water as a by-product. Often there is a Gas Diffusion Layer (GDL) made of porous carbon fibre that is sandwiched between the MEA and a Flow Field (FF) plate with special flow channels for evenly distributing gases. The water produced on the catalyst layer passes through the GDL until it reaches the gas channels where it is pushed out of the cell. The phase change and the water and thermal management in fuel cells have been studied extensively in the last few years and several patents have been filed in that respect. However, the challenge of simplification, compactness, cost reduction and easy manufacture remain. The limitation of the state-of-the-art fuel cell technology can be explained with a simple example. Patent application US9947943 relates to the design and production of fuel cell stacks for (mainly) automotive application based on metallic plates. An active area of around 300 [cm²] is been considered on each cell with a cell pitch of around 1.1 [mm]. The thickness of each cell is mainly dictated by the thickness of the plate. Hence, by the limitation of the stamping technology. In order to offer a more competitive product to the market, it is important to increase the 'volume power density' of a stack and to make them more compact. With the existing stamping technology for metallic plates and the compression/injection moulding for graphite plates, it is not possible and therefore other means of production should be sought. Examples of such flow structures are disclosed for example in US20190242021 and US20150118595. Examples of fluid guiding assemblies employing porous distributors are disclosed in US 20190221866 and US 20140178785, for instance.

### SUMMARY OF THE INVENTION

In the current invention, a problem to be solved is the provision of a fluid guiding assembly that allows the production of thinner fuel cells. Additionally, these fuel cells should have a simple design and should be easy to manufacture.

This problem is solved by a fluid guiding assembly with the features of claim 1. Further embodiments of the fluid guiding assembly, a flow field structure and a fuel cell, as well as a manufacturing method thereof are defined by the features of further claims.

A fluid guiding assembly for fuel cells according to the invention comprising a channel structure and a gas diffusion layer arranged on the channel structure. The channel structure defining flow field channels extending from a first end of the channel structure to an opposite second end. A porous distributor is arranged at both ends of the channel structure, extending over the entire width of the channel structure, from a first lateral side of the channel structure to an opposite second lateral side of the channel structure, wherein the height of the distributors equals the sum of the height of the diffusion layer and the height of the channel structure.

With such a design, it is possible to reduce the thickness of the fluid guiding assembly and therefore to reduce the thickness of a fuel cell, where the fluid guiding assembly is used. A thickness reduction of almost 50% can be achieved, while at the same time, the performance of the cell is increased. Additionally, the gas diffusion and the heat transfer rate of the fluid guiding assembly is increased significantly. Also, the production costs of such an assembly are lower and thus, the production cost of a fuel cell with such an assembly are lower.

In one embodiment, the distributors are formed in one piece and have a porosity of between 10% and 90%. In a further embodiment, the porosity ranges between 50% and 80%.

In one embodiment, the porosity changes over the width of the distributors, i.e. when the fluid guiding assembly is introduced in a fuel cell, the porosity in the vicinity of a corresponding manifold is lower than further away from it. For example, if the manifold is allocated on one lateral side, the porosity there is the smallest and the porosity is the highest on the opposite lateral side. If the manifold is allocated in the middle, the porosity is the highest on both lateral sides and is the smallest in the middle.

In one embodiment, the length of the distributors is in the range of 1% to 10% of the length of the flow field channels, i.e. of the channel structure.

In one embodiment, the length of the distributors is in the range of 0.1 millimetre to 20 millimetres. In a further embodiment, the length of the distributors is in the range of 1 millimetre to 10 millimetres.

In one embodiment not according to the invention, the height of the distributors equals the height of the channel structure.

In one embodiment not according to the invention, the height of the distributors is smaller than the height of the channel structure.

According to the invention, the height of the distributors equals the sum of the height of the diffusion layer and the height of the channel structure.

Consequently, the height of the distributors is bigger than the height of the channel structure.

In one embodiment, the height of the distributors is in the range of 50 micrometres to 400 micrometres. In a further embodiment, the height of the distributors is in the range of 200 micrometres to 400 micrometres.

In one embodiment, the flow channel structure and the distributors are permanently connected with each other.

In one embodiment, the gas diffusion layer, the flow channel structure and the distributors are permanently connected with each other. The permanent connection can be realized by coating, pressing or hot pressing.

In one embodiment, the distributors comprise at least one of the group comprising an open-pore foam, a hole pattern and a slit pattern.

In one embodiment, the distributors comprise circular, oval or angular holes.

In one embodiment, the distributors comprise straight, curved or angled slits.

In one embodiment, the distributors are made of metal, plastic or resin or a combination thereof.

In one embodiment, the channel structure comprises straight, serpentine or interdigitated flow field channels.

In one embodiment, the channel structure and the distributors are formed integrally in a single piece.

The features of the above-mentioned embodiments of the fluid guiding assembly can be used in any combination, unless they contradict each other.

A flow field structure according to the invention comprises a fluid guiding assembly according to one of the before-mentioned embodiments and a separator plate with a recess for receiving the fluid guiding assembly. The flow field structure further comprises manifolds and distribution channels for supplying gas to the distributors on the first end of the channel structure and for collecting gas from the distributors on the second end of the channel structure.

A fuel cell according to the invention comprises at least one membrane electrode assembly braced by two flow field structures according to the before-mentioned embodiment. In one embodiment, the fuel cell comprises two current collector plates and two backing plates, wherein one current collector plate is arranged adjacent to each flow field structure and wherein one backing plate is arranged adjacent to each current collector plate.

In a further embodiment, the two backing plates are braced by clamping elements.

A method for manufacturing a fluid guiding assembly according to the invention comprises the steps of:
- Providing a channel structure;
- Providing a porous distributor at both ends of the channel structure; and
- Providing a gas diffusion layer on the channel structure,
wherein the height of the distributors equals the sum of the height of the diffusion layer and the height of the channel structure.

In one embodiment, the method comprises the step of:
- Permanently connecting the channel structure and the two distributors with each other.

In one embodiment, the method comprises the steps of:
- Permanently connecting the gas diffusion layer with the channel structure and the two distributors, simultaneously or after the connecting of the channel structure and the distributors.

In one embodiment, the permanently connecting comprises pressing or wherein the permanently connecting comprises heating and pressing.

The features of the above-mentioned embodiments of the method for manufacturing can be used in any combination, unless they contradict each other.

### BRIEF DESCRIPTION OF THE DRAWINGS

Embodiments of the current invention are described in more detail in the following with reference to the figures. These are for illustrative purposes only and are not to be construed as limiting. It shows
Fig. 1 a top view of a flow field plate according to the prior art;
Fig. 2 a top view of a flow field structure according to the invention;
Fig. 3 a partial sectional view of the flow field structure of figure 2 along section line XX;
Figs. 4A-B sectional views of embodiments of distributors according to the invention;
Figs. 5A-B partial perspective views of embodiments of flow field channels;
Fig. 6 a sectional view of a membrane electrode assembly braced by two flow field structures according to the invention; and
Figs. 7A-H a depiction of the manufacturing process of one embodiment of a fluid guiding assembly according to the invention.

### DETAILED DESCRIPTION OF THE INVENTION

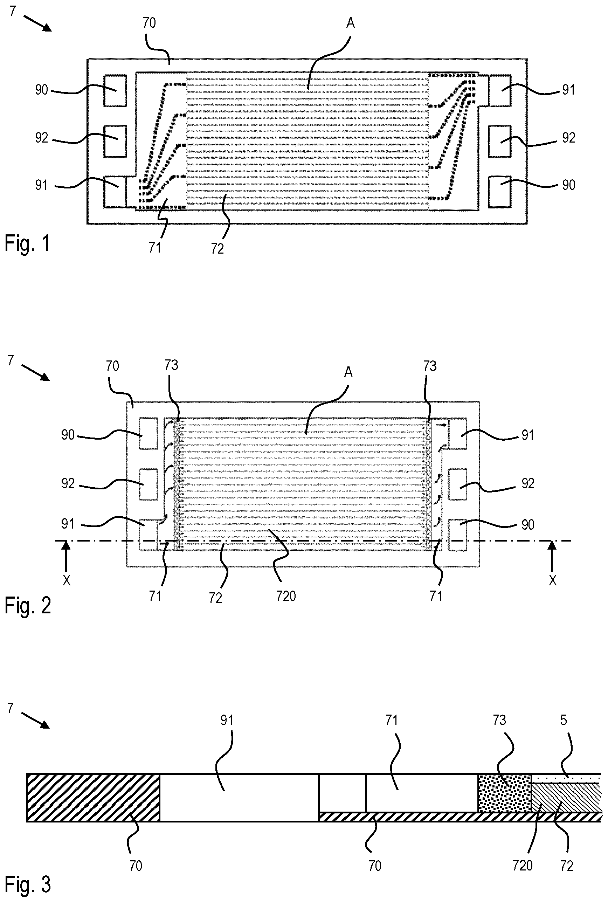

Figure 1 shows a top view of a flow field plate according to the prior art. A bi-polar plate 7, made of any material such as metal or graphite comprises several gas/liquid inlet/outlet manifolds 90,91,92 that are located at the outer part of the plate. The active area A with catalyst layer is located in the middle of the cell with a special Flow Field (FF) underneath. Flow fields guarantee a sufficient and uniform gas supply on the active area A. Between the inlet and outlet manifolds there are Flow Distribution Channels (FDC) that guide the gases so that they are distributed uniformly on the flow fields and active area. In fuel cells, regardless of the bi-polar production method (either composite graphite or metallic), it is common to have uniform gas flow fields on the active area to evenly distribute gases through the catalyst layer. In a stack assembly, there are inlet and outlet manifolds that are connected to every cell for gas supply. After gas/liquid enters a cell, a uniform distribution is required within the cell before reaching the active area. Usually, this is done with flow distribution channels 71 that are located between the active area A and the corresponding inlet manifold 91. In a similar manner, there is a special flow pattern between the active area and outlet manifold in order to avoid unnecessary back pressure and perturbation of flow on the cell. In order to have a uniform gas flow distribution, a sufficient water management and to supply a sufficient amount of reactant to the catalyst layers, gas flow channels are designed on or in channel structures. The channels guide the reactants to flow in a specific direction and assist in the water removal from the cell. Depending on the material that the plate is made of, various method of production for the flow channels or patterns are used. For example, if plates/separators are made of graphite composite materials, injection moulding, compression moulding or machining is used. If the plates are made of metallic plates, stamping has been the most promising and economically viable technology that has been used. For every single bipolar plate assembly, normally two separate sheet metals are stamped, laser welded and coated (before or after stamping) with a protective coating. In some cases, the laser welding is eliminated, and conventional sealing is used. One of the major drawbacks of the designs of the prior art is the limitation on how much the thickness of a single plate can be reduced. This has a direct influence on the size of an assembled stack and therefore on the volume power density. On the other hand, the width and depth of the channels that can be produced are limited by the elongation of the sheet metal or by the limitation of the machining process. The gas channels are separated from one another by ribs that are in contact with the Gas Diffusion Layers (GDL). Water produced due to electro-chemical reaction passes through the GDL and ends up into the gas channels. One of the main limitations of plates produced by graphite or stamping technology is that the width of the contact ribs (sometimes called 'land') cannot be reduced to less than 1-2 [mm]. As a result, the ribs are one of the major sources of water accumulation in the cell, which reduces performance of the cell and also increase corrosion rates on the plates. To overcome this issue, porous media has been used as gas flow channels. However, the limitation of such a structure is that there is no control in which direction the gas flows, which limits the performance of the cell and increases the water accumulation at the dead zones (for example, at the corners of the cell), especially under dynamic load operations. Alternatively, if thin wires in parallel are used to produce gas channels, several other wires are mounted perpendicular on top of them to act as gas diffusion layer (GDL), forming a mesh. With such a design, 50% of the active area is blocked, where the wires are in contact with active area. Furthermore, it is extremely tedious and time consuming to put together such amount of tiny wires and join them together even with fixtures and automation. Joining them by welding, in case of metallic wires, or hot fuse them, in case of plastic wires is an extremely difficult task. The quality control of such an assembly is difficult and there is a high chance of blocking some of the channels/holes, which would produce hot spots on the membrane and damage it. Furthermore, another gas delivery mechanism is required to transfer gases to the active area and the mesh. If a few of those wires are in contact with each other at the edges of the assembly, they would block the gas flow and deviate the gas from uniformity. In alternative embodiments, a woven mesh has been used as gas diffusion layer. The uniform gas distribution within the active area of such a design is limited. Thus, the diffusion of the gases to and from the cell are also limited, which creates a large pressure drop due to structure of the mesh and furthermore effects on capillary forces. A conventional method of producing gas diffusion layers (GDL) is the combination of carbon fibres and a micro-porous layer on one side of the GDL where it is in direct contact with a catalyst layer in a cell assembly. GDLs from Freudenberg or Toray are some of the state of the art in the market. Normally, a GDL is compressed between the flow channels of a bipolar plate and a Membrane Electrode Assembly (MEA) on the anode side and on the cathode side.

Figure 2 shows a top view of a flow field structure 7 according to the invention and figure 3 shows a partial sectional view of the flow field structure of figure 2 along section line XX. The inventive structure combines several components inside a fuel cell together in a more compact and reliable manner. It comprises a unique and state-of-the-art channel structure 720, a gas diffusion layer and gas distributors 73 all at once. It not only overcomes open issues related to the state-of-the-art, but also improves the performance of a fuel cell significantly. At the same time, such a design simplifies a cell assembly, thus, brings in compactness, reliability and also provides a significant cost reduction in the production of fuel cells. In the shown embodiment, the channel structure 720 comprising the flow field channels 72 are located in the centre of the assembly, i.e. in the region of the active are A of the fuel cell. There are two separate distributors 73. Each is fixed at one end of the channel structure 720. They serve as mechanical support during the production process and to distribute gases uniformly before they enter the active area A. Furthermore, there is a thin layer on top of the channel structure 720 that acts as gas diffusion layer 5. This design has several functionalities and advantages; Firstly, it is extremely compact and less expensive to produce compared to existing concept. Secondly, it acts as a flow straightener for the active area A, i.e. it unifies the flow distribution of the gases before they enter the active area A. Thirdly, in case the channel structure 720 is made of separate pieces like wires, it acts as a mechanical support and holds them in place and under tension. Fourthly, it makes the overall cell assembly including the plate smaller and more compact. As shown in figure 3, there is not limitation on size and dimensioning of the distributors 73 and it can vary based on the size of the cell, the separator plate 70 and the active area A. The length of the distributors 73 is preferably 1-30% and more preferably 1-10% of the length of the flow field channels 72, but not limited. For instance, if length of a flow field channel 72 is 100 mm, a preferred length of the distributors may be between 1-10mm. The thickness of the distributors 73 equals the sum of the height of the diffusion layer and the height of the channel structure. Since the distributors 73 may act as a mechanical support and holder for the channel structure 720, it may be necessary to make it slightly thicker so that the joint between the channel structure 720 and the distributors 73 can be arranged at the top of it. For example, if the thickness or height of the channel structure 720 is 200 [pm], the distributor thickness or height may vary between 200-400[pm], but not limited. Such a design gives more flexibility in the cell assembly, especially when the distributors 73 are in direct contact with a catalyst coated membrane (CCM) or sub-gasket or any other component in the cell assembly. Such a design makes the plate and therefore the overall size of the cell (active area + sub-gasket around) smaller, which in principle reduces stack size and the cost of production. Figure 2 shows the layout of a cell with the distributors 73 according to the invention. The length of the separator plate 70 is reduced compared with the original plate design shown in figure 1. The main difference between the plate of figure 1 and the one of figure 2 is that the active area A and gas inlet/outlet manifolds 90,91,92 are kept the same, whereas the zone where the distributors are located is significantly optimised and shorter in concept according to the invention. For example, the oxidant enters the cell from the oxidant manifold 91 and is distributed in the distribution channel 71 as shown in the figure with arrows. Afterwards, it reaches the distributor 73 where it regulates and homogenise the gas flow before it enters the flow field channels 72 and the active area A. The length of the distribution channel 71 is optimised based on the design and the geometry of the cell. It shouldn't be too long to prevent the creation of big back pressure. Likewise, it shouldn't be too small as otherwise, the assembled layers on top of it, such as the catalyst coated membrane or the sub-gasket may deform and clog the distribution channel 71. Alternatively, the distributors can be extended over the entire length of the distribution channel between the channel structure 720 and the corresponding manifold 91. It is a design parameter that can be tuned by those skilled in the art.

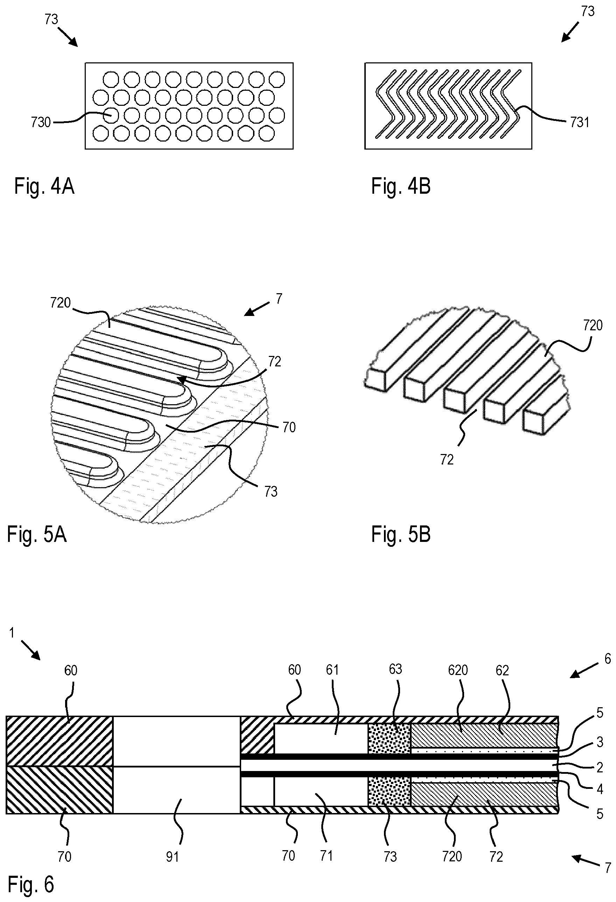

Figures 4A-B show sectional views of embodiments of distributors 73 according to the invention. The distributors 73 can be produced from various materials such as metal, aluminium, titanium, plastic, thermoplastic, resin or porous pieces, but not limited. The structure of the distributors is tuned based on the material used for its production. There is no limitation on design of the distributors and how it should be produced. For instance, it can be made of porous resin or metal or anything else. The porosity of the distributors should be estimated based on design and size of the cell, preferably it should be between 10-90% and more preferably between 50-80%, but not limited. Very high porosity is not recommended as it reduces the mechanical stability and very low porosity is also not recommended as it produces a very large pressure drop across the distributors and thus, across the fuel cell. If the distributors are not produced from a porous material per se, other manufacturing techniques such as 3D-printing, injection/compression moulding, laminating, erosion or any other method can be used. For example, the porosity can be created by a plurality of pins 730 that extend through the distributors 73 or by a plurality of slits 731 that extend through the distributors 73. In the depicted embodiment of figure 4A, the pins 730 are evenly distributed over the cross-section of the distributor 73. In the depicted embodiment of figure 4B, the slits 731 are serpentine-shaped and are evenly distributed over the width of the cross-section of the separator 73. The distributors 73 can be used together with separator plates 70 made of metal, graphite or anything else. The material of the distributors 73 and the channel structure 720 shouldn't be the same necessarily. For instance, the flow path of a conventional fuel cell, shown in Figure 1, can be reduced or eliminated by introducing a distributor according to the invention in the channel between the channel structure and the corresponding manifold.

Figures 5A-B show partial perspective views of embodiments of flow field channels 72 in a respective channel structure 720. In the depicted embodiment, the flow field channels 72 are produced by the stamping of a thin metal sheet. In this case, the channel structure 720 is formed integrally together with the separator plate 70 in a single piece. Thus, the distributor 73 is adjoining the flow channel structure 720 or the separator plate 70, respectively. In fuel cells, fresh oxidant (mostly air) diffuses through the gas diffusion layer to reach the catalyst layer. The water produced on the catalyst layer is moved towards the channels due to capillary forces in the gas diffusion layer. Inside the channels, condensed water and oxidant are mixed and the water produced is pushed out of the channel. The gas velocity in the channel explains a great deal about the behaviour of fresh oxidant, the movement of the water and also the mixing phenomena that occur in the channels.

Gas flows in fuel cells are mainly laminar. However, based on the Reynolds number, different mixing mechanisms may occur between the gas and the condensed water. For instance, the mixing of gas/liquid at a Reynolds number 1000 is different than the mixing at Reynolds numbers of less than 500. A high gas flow velocity helps pushing the condensed water out of the flow field channels. However, due to complex mixing effects, it could also prevent fresh air from reaching the active area, especially towards the outlet side of the channel where there is an accumulation of water. In order to address this issue and to improve water management in gas channels, it is important to differentiate between conventional mixing and diffusion mixing. In diffusion mixing, the liquid and gas are kept separate from each-other before and during the transition zone. The diffusion mixing is directly related to the fluid flow, the Reynolds- and the Prandtl-Number. Thus, the dimensioning of the flow field channels 72 and the gas diffusion layer 5 should be done as such that the phenomenon of conventional and diffusion mixings are considered. Hence, the ratio between the Reynolds number and the Prandtl number should be in the range of for example 0.01 to 1000 and more preferably 0.05 to 500, but not limited.

In the embodiment of figure 5B, several wires 720 are aligned at identical distances from each other to create the flow field channels 72. The distance between two neighbouring wires is preferably 10-1000 [pm] and more preferably 100-300[pm], but not limited. The preferred cross-section of the wires is one of round, square or rectangular, but not limited. In case of round wires, a preferred diameter is between 10-500 [pm] and preferably 100-300 [pm]. In case of square wires, preferred a side length is between 10-500 [pm] and preferably 100-300 [pm], but not limited. A similar structure can be made using other methods such as laser cutting or else, but not limited. The wires can be made of various materials and there is no limitation as long as the material is electrically conductive. A few examples of materials that can be used are stainless steel, aluminium, titanium, copper or thermoplastics such as PET, PEN, epoxy resins, urethane resin, polyamide resins, acrylic resins, carbon, carbon fibre or anything else. Regardless of the material used, anti-corrosion protective coating may be applied to prevent corrosion. Specific materials that can be used includes gold, silver, copper, aluminium, platinum ruthenium, and can be applied by using DLC, CVD or PVD coating or else. Furthermore, if the wires are made of nonconductive materials such as thermoplastic, conducting coating should be applied in order to make them functional in an assembly. However, it may be less conductive than a wire made of material. There is no limitation for the material used as conductive coating. For instance, carbon type materials in combination with a binder like PVDF or PTFE or conductive particles like Au, Ni or Palladium can be used, but not limited.

Figure 6 shows a sectional view of a membrane electrode assembly braced by two flow field structures according to the invention that can be used in a fuel cell 1. The membrane electrode assembly comprises a membrane 2, braced by an anode electrode layer 3 and a cathode electrode layer 4. The first and second flow field structure 6,7 each comprise a separator plate 60,70, a channel structure 620,720, distributors 63,73 and gas diffusion layers 5 that are arranged in corresponding recesses in the corresponding flow field structure. Each channel structure 620,720 comprises the corresponding flow field channels 62,72. In the shown embodiment, each flow field structure 6,7 comprises distribution channels 61,71 that connect the distributors 63,73 to the corresponding manifold 91. The gas diffusion layer 5 used in the invention is thinner than conventional gas diffusion layers and its preferred thickness is between 10-150 [pm] and more preferably 25-65[µm], but not limited. By introducing the gas diffusion layer between the channel structure 720 and the catalyst layer 3,4, gases and water will have enough space to pass through it, without blocking it. Furthermore, due to the very narrow contact ribs between the layers, the accumulation of water at the contact points are eliminated completely. The gas diffusion layer 5 used in the invention acts as a mechanical support for the channel structure 720 and vice-vera. Due to the very small structure forming the flow field channels 72 and the small thickness of the gas diffusion layer 5, there is a bilateral support. As it can be appreciated, the handling and manipulation of a 25-65 [pm] layer and flow channels with a thickness of around 200 [pm] is extremely tedious. However, the current structure provides a reliable mean to achieve that. The gas diffusion layer can be made of any substrate, as long as it has a porous structure for diffusion of oxidant and fuel from and to the catalyst layers. It should also have excellent electrical-conductivity properties to reduce resistance between the layer. There are several substrates that can be used as conductive particles. Some of the well-known and state-of-the-art materials are carbon, carbon black, carbon powder, carbon particle, carbon paper/cloth or anything else. It is also preferable to have additional substrate in the mixture that has hydrophobic properties. The hydrophobic substrate acts as a binder in the mixture and holds the structure together after its curing. It also helps to push the water towards the gas channels. Some of the state-of-the-art hydrophobic particles that can be used are PVDF, PTFE or anything else from similar families. There is no definitive limit on quantity of the binder in the mixture. However, the recommended percentage by mass is preferably between 5-80% and more preferably 10-30%, but not limited. In order to increase the electrical conductivity, it is possible to add an additional substrate to the mixture. Some examples are, gold, platinum, ruthenium or anything else from the same family. As stated earlier, due to the thickness of the gas diffusion layer, it is preferable to manufacture it along with the flow field channels. There are several methods that can be used to produce the gas diffusion layer. For instance, it can be produced by touch coating, screen printing, 3D printing or other methods, where for each machinery used, the composition and viscosity of the mixture should be tuned.

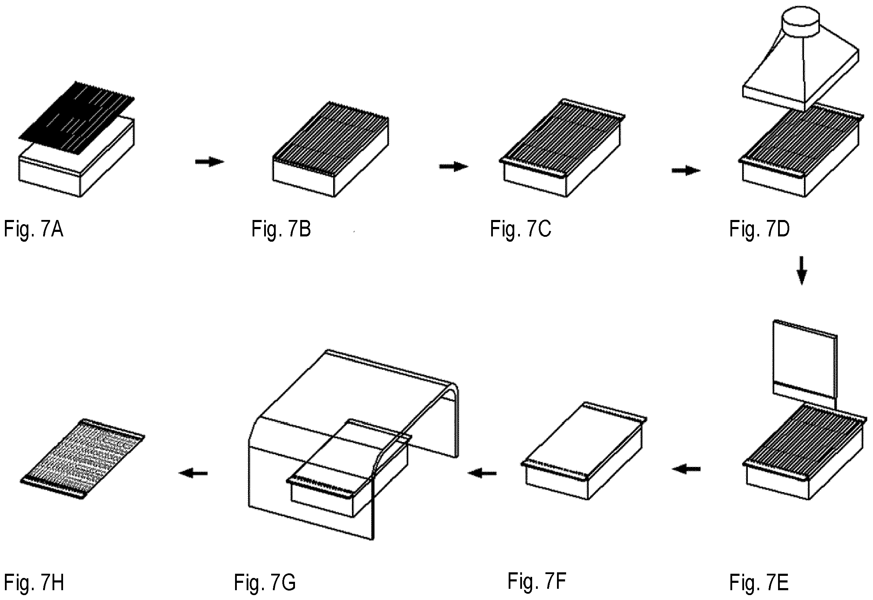

Figures 7A-H show a depiction of the manufacturing process of one embodiment of a fluid guiding assembly according to the invention. Those skilled in the art can appreciate that it is just an example and several other techniques can be proposed. In the following, the necessary steps to be taken to produce a structure that comprises flow field channels in a channel structure, a gas diffusion layer and distributors, which can be used directly inside a cell assembly are described.

Step 1 - Figure 7A: several wires are positioned side-by-side in order to form flow field channels 72 for a fuel cell. The structure of the channels is not limited and can be parallel, serpentine, interdigitated or a combination thereof.

Step 2 - Figure 7B: A fixture is created so that the wires are positioned and held accurately in place. There are several methods for manufacturing the fixture, for example it can be 3D-printed or machined or anything else.

Step 3 - Figure 7C: once the wires are fixed and held in tension, at the end of the wires, i.e. at the inlet and the outlet of the flow field channels 72, two distributors 73 are placed and fixed.

Step 4: based on the material used, several methods can be used to merge the pieces together, for example, hot pressing. Thereby the assembly is put under pressure for certain period of time at a fix temperature.

Step 5: after merging the pieces together, it is cooled down to room temperature and afterwards, the gas diffusion layer 5 is applied. There are several possibilities; for instance, a conventional gas diffusion layer 5 can be used or a paste can be applied on top of the flow field channels 72 with screen printing or other technique.

Step 6: after applying the gas diffusion layer 5, the assembly is kept at room temperature and a quality control procedure is performed to verify accuracy and homogeneity of the layer and structure.

Step 7: the assembly is put inside an oven for curing. Based on the materials used on the channel structure 720 and the gas diffusion layer 5, several options are available. For instance, a conventional oven, infra-red oven or UV oven can be used. In case of using a paste as gas diffusion layer 5, the structure, for example, is heated to a temperature of around 350°C in order to cure the mixture and the binder.

Step 8: After firing the assembly, it leaves the oven and cools down to room temperature.

The structure is ready to be mounted in a cell assembly. Similar assembly can be used on both anode and cathode side or they can be different; for instance, structure on the cathode side may have larger flow channels in order to reduce pressure drop or they may have different gas diffusion layers for various applications.

As a practical example, to produce a single cell assembly with an active area of 50×50mm², the following components are selected. For the distributors 63,73, a resin type material with a porosity of around 75% with a height of 2mm, a length of 5mm and a width of 50mm is prepared. For the channel structure 620,720, Carbon Fibre wires with a diameter of 0.4mm and a length of 55mm is prepared to be positioned with an identical distance of 0.3mm from each other. For the gas diffusion layer 5, carbon black powder, PTFE dispersion and a surfactant are mixed together, wherein the percentage of carbon black and PTFE was kept on 80-20%. The pieces are assembled together using a fixture. Gas diffusion layer paste was applied on the channel structure using a screen-printer and the assembly is put inside an oven at a temperature of 350°C for 15min. A similar procedure is repeated for the second structure for the anode side of the cell. Flat compressed graphite plates with a thickness of 4mm is used as a separator. Additionally, flat sealants made of EPDM are cut and prepared for the assembly. A membrane electrode assembly is manufactured as follows: A Nafion membrane with a thickness of 0.15mm is used as an electrolyte. Platinum and carbon black are mixed using a Nafion solvent and are sprayed on both sides of the membrane with a loading of 0.4 and 0.04mg/cm², on the cathode side or on the anode side, respectively. All the layers were assembled on top of each other in the following order: graphite plate, gasket, structure-1, membrane electrode assembly, structure-2, gasket and graphite plate. The assembly was successfully tested at a temperature of around 75°C with a stable voltage of 0.6V and a current density of 1.6A/cm².

### REFERENCE SIGNS LIST

| | | | |
|---|---|---|---|
| 1 | fuel cell | 70 | separator plate |
| 2 | membrane | 71 | distribution channel |
| 3 | anode electrode layer | 72 | flow field channel |
| 4 | cathode electrode | 720 | channel structure |
| | layer | 73 | distributor |
| 5 | gas diffusion layer | 730 | hole |
| 6 | first flow field structure | 731 | slit |
| 60 | separator plate | 90 | fuel manifold |
| | | 91 | oxidant manifold |
| 61 | distribution channel | 92 | coolant manifold |
| 62 | flow field channel | A | active area |
| 620 | channel structure | | |
| 63 | distributor | | |
| 7 | second flow field structure | | |

## Claims

1. A fluid guiding assembly for fuel cells, comprising a channel structure (620;720) and a gas diffusion layer (5) arranged on the channel structure (620;720), the channel structure (620;720) defining flow field channels (62;72) extending from a first end of the channel structure (620;720) to an opposite second end, wherein a porous distributor (63;73) is arranged at both ends of the channel structure (620;720), extending over the entire width of the channel structure (620;720), **characterized in that** the height of the distributors (63;73) equals the sum of the height of the diffusion layer (5) and the height of the channel structure (620;720).

2. The fluid guiding assembly according to claim 1, wherein the distributors (63;73) being formed in one piece and having a porosity of between 10% and 90%.

3. The fluid guiding assembly according to claim 1 or 2, wherein the porosity changes over the width of the distributors (63;73).

4. The fluid guiding assembly according to one of the preceding claims, wherein the length of the distributors (63;73) is in the range of 1% to 10% of the length of the flow field channels (62;72).

5. The fluid guiding assembly according to claim 4, wherein the length of the distributors (63;73) is in the range of 0.1 millimetre to 20 millimetres.

6. The fluid guiding assembly according to one of claims 1 to 5, wherein the height of the distributors (63;73) is in the range of 50 micrometres to 400 micrometres.

7. The fluid guiding assembly according to one of the preceding claims, wherein the flow channel structure (620;720) and the distributors (63;73) are permanently connected with each other.

8. The fluid guiding assembly according to claim 7, wherein the gas diffusion layer (5), the flow channel structure (620;720) and the distributors (63;73) are permanently connected with each other.

9. The fluid guiding assembly according to one of the preceding claims, wherein the distributors (63;73) comprising at least one of the group comprising an open-pore foam, a hole pattern (730) and a slit pattern (731).

10. The fluid guiding assembly according to claim 9, wherein the distributors (63;73) comprising circular, oval or angular holes (730).

11. The fluid guiding assembly according to claim 9, wherein the distributors (63;73) comprising straight, curved or angled slits (731).

12. The fluid guiding assembly according to one of the preceding claims, wherein the distributors (63;73) are made of metal, plastic or resin.

13. The fluid guiding assembly according to one of the preceding claims, wherein the channel structure (620;720) comprising straight, serpentine or interdigitated flow field channels (62;72).

14. The fluid guiding assembly according to one of claims 7 to 13 wherein the channel structure (620;720) and the distributors are formed integrally in a single piece.

15. A flow field structure (6;7) comprising a fluid guiding assembly according to one of the preceding claims and a separator plate (60;70) with a recess for receiving the fluid guiding assembly, further comprising manifolds (90;91) and distribution channels (61;71) for supplying gas to the distributors (63;73) on the first end of the channel structure (620;720) and for collecting gas from the distributors (63;73) on the second end of the channel structure (620;720).

16. A fuel cell (1) comprising at least one membrane electrode assembly (2,3) braced by two flow field structures (6;7) according to claim 15.

17. The fuel cell (1) according to claim 16, comprising two current collector plates and two backing plates, wherein one current collector plate is arranged adjacent to each flow field structure (6;7) and wherein one backing plate is arranged adjacent to each current collector plate.

18. A method for manufacturing a fluid guiding assembly comprising the steps of:
- Providing a channel structure (620;720);
- Providing a porous distributor (63;73) on both ends of the channel structure (620;720); and
- Providing a gas diffusion layer (5) on the channel structure (620;720), wherein the height of the distributors (63;73) equals the sum of the height of the diffusion layer (5) and the height of the channel structure (620;720).

19. The method according to claim 18, comprising the step of:
- Permanently connecting the channel structure (620;720) and the two distributors (63;73) with each other.

20. The method according to claim 19, comprising the steps of:
- Permanently connecting the gas diffusion layer (5) with the channel structure (620;720) and the two distributors (63;73), simultaneously or after the connecting of the channel structure (620;720) and the distributors (63,73).

21. The method according to claim 19 or 20, wherein the permanently connecting comprises pressing or wherein the permanently connecting comprises heating and pressing.

## Patentansprüche

1. Eine Fluidführungsanordnung für Brennstoffzellen, umfassend eine Kanalstruktur (620;720) und eine auf der Kanalstruktur (620;720) angeordnete Gasdiffusionsschicht (5), wobei die Kanalstruktur (620;720) Strömungsfeldkanäle (62;72) definiert, die sich von einem ersten Ende der Kanalstruktur (620;720) zu einem gegenüberliegenden zweiten Ende erstrecken, wobei ein poröser Verteiler (63;73) an beiden Enden der Kanalstruktur (620;720) angeordnet ist, der sich über die gesamte Breite der Kanalstruktur (620;720) erstreckt, **dadurch gekennzeichnet, dass** die Höhe der Verteiler (63;73) gleich der Summe aus der Höhe der Diffusionsschicht (5) und der Höhe der Kanalstruktur (620;720) ist.

2. Die Fluidführungsanordnung nach Anspruch 1, wobei die Verteiler (63;73) in einem Stück geformt sind und eine Porosität zwischen 10% und 90% aufweisen.

3. Die Fluidführungsanordnung nach Anspruch 1 oder 2, wobei sich die Porosität über die Breite der Verteiler (63;73) ändert.

4. Die Fluidführungsanordnung nach einem der vorhergehenden Ansprüche, wobei die Länge der Verteiler (63;73) im Bereich von 1% bis 10% der Länge der Strömungsfeldkanäle (62;72) liegt.

5. Die Fluidführungsanordnung nach Anspruch 4, wobei die Länge der Verteiler (63;73) im Bereich von 0,1 Millimeter bis 20 Millimeter liegt.

6. Die Fluidführungsanordnung nach einem der Ansprüche 1 bis 5, wobei die Höhe der Verteiler (63;73) im Bereich von 50 Mikrometern bis 400 Mikrometern liegt.

7. Die Fluidführungsanordnung nach einem der vorhergehenden Ansprüche, wobei die Strömungskanalstruktur (620;720) und die Verteiler (63;73) fest miteinander verbunden sind.

8. Die Fluidführungsanordnung nach Anspruch 7, wobei die Gasdiffusionsschicht (5), die Strömungskanalstruktur (620;720) und die Verteiler (63;73) dauerhaft miteinander verbunden sind.

9. Die Fluidführungsanordnung nach einem der vorhergehenden Ansprüche, wobei die Verteiler (63;73) mindestens einen aus der Gruppe umfassend einen offenporigen Schaum, ein Lochmuster (730) und ein Schlitzmuster (731) umfassen.

10. Die Fluidführungsanordnung nach Anspruch 9, wobei die Verteiler (63;73) kreisförmige, ovale oder eckige Löcher (730) aufweisen.

11. Die Fluidführungsanordnung nach Anspruch 9, wobei die Verteiler (63;73) gerade, gekrümmte oder abgewinkelte Schlitze (731) aufweisen.

12. Die Fluidführungsanordnung nach einem der vorhergehenden Ansprüche, wobei die Verteiler (63;73) aus Metall, Kunststoff oder Harz hergestellt sind.

13. Die Fluidführungsanordnung nach einem der vorhergehenden Ansprüche, wobei die Kanalstruktur (620;720) gerade, serpentinenförmige oder ineinandergreifende Strömungsfeldkanäle (62;72) umfasst.

14. Die Fluidführungsanordnung nach einem der Ansprüche 7 bis 13, bei der die Kanalstruktur (620;720) und die Verteiler integral in einem Stück ausgebildet sind.

15. Eine Strömungsfeldstruktur (6;7) mit einer Fluidführungsanordnung nach einem der vorhergehenden Ansprüche und einer Trennplatte (60;70) mit einer Ausnehmung zur Aufnahme der Fluidführungsanordnung, ferner mit Verteilern (90;91) und Verteilerkanälen (61;71) zur Gaszufuhr zu den Verteilern (63;73) am ersten Ende der Kanalstruktur (620;720) und zum Sammeln von Gas von den Verteilern (63;73) am zweiten Ende der Kanalstruktur (620;720).

16. Eine Brennstoffzelle (1) mit mindestens einer Membranelektrodeneinheit (2,3), die zwischen zwei Strömungsfeldstrukturen (6;7) nach Anspruch 15 verspannt ist.

17. Die Brennstoffzelle (1) nach Anspruch 16, umfassend zwei Stromkollektorplatten und zwei Stützplatten, wobei eine Stromkollektorplatte benachbart zu jeder Strömungsfeldstruktur (6;7) angeordnet ist und wobei eine Stützplatte benachbart zu jeder Stromkollektorplatte angeordnet ist.

18. Ein Verfahren zur Herstellung einer Fluidführungsanordnung, das die folgenden Schritte umfasst:
- Bereitstellen einer Kanalstruktur (620;720);
- Bereitstellen eines porösen Verteilers (63;73) an beiden Enden der Kanalstruktur (620;720); und
- Bereitstellen einer Gasdiffusionsschicht (5) auf der Kanalstruktur (620;720),
wobei die Höhe der Verteiler (63;73) gleich der Summe aus der Höhe der Diffusionsschicht (5) und der Höhe der Kanalstruktur (620;720) ist.

19. Das Verfahren nach Anspruch 18, umfassend den Schritt:
- Dauerhaftes Verbinden der Kanalstruktur (620;720) und der beiden Verteiler (63;73) miteinander.

20. Das Verfahren nach Anspruch 19, umfassend die folgenden Schritte:
- Dauerhaftes Verbinden der Gasdiffusionsschicht (5) mit der Kanalstruktur (620;720) und den beiden Verteilern (63;73),
gleichzeitig oder nach dem Verbinden der Kanalstruktur (620;720) und der Verteiler (63;73).

21. Das Verfahren nach Anspruch 19 oder 20, wobei das dauerhafte Verbinden Pressen umfasst oder wobei das dauerhafte Verbinden Erhitzen und Pressen umfasst.

## Revendications

1. Ensemble de guidage de fluide pour piles à combustible, comprenant une structure de canal (620;720) et une couche de diffusion de gaz (5) disposée sur la structure de canal (620;720), la structure de canal (620;720) définissant des canaux de champ d'écoulement (62;72) s'étendant d'une première extrémité de la structure de canal (620;720) à une deuxième extrémité opposée, dans laquelle un distributeur poreux (63 ; 73) est disposé aux deux extrémités de la structure de canal (620;720), s'étendant sur toute la largeur de la structure de canal (620;720), **caractérisé en ce que** la hauteur des distributeurs (63;73) est égale à la somme de la hauteur de la couche de diffusion (5) et de la hauteur de la structure de canal (620;720).

2. L'ensemble de guidage de fluide selon la revendication 1, dans lequel les distributeurs (63;73) sont formés d'une seule pièce et ont une porosité comprise entre 10% et 90%.

3. L'ensemble de guidage de fluide selon la revendication 1 ou 2, dans lequel la porosité change sur la largeur des distributeurs (63;73).

4. L'ensemble de guidage de fluide selon l'une des revendications précédentes, dans lequel la longueur des distributeurs (63;73) est comprise entre 1 % et 10 % de la longueur des canaux du champ d'écoulement (62;72).

5. L'ensemble de guidage de fluide selon la revendication 4, dans lequel la longueur des distributeurs (63;73) est comprise entre 0,1 millimètre et 20 millimètres.

6. L'ensemble de guidage de fluide selon l'une des revendications 1 à 5, dans lequel la hauteur des distributeurs (63;73) est comprise entre 50 micromètres et 400 micromètres.

7. L'ensemble de guidage de fluide selon l'une des revendications précédentes, dans lequel la structure du canal d'écoulement (620;720) et les distributeurs (63;73) sont reliés en permanence l'un à l'autre.

8. L'ensemble de guidage de fluide selon la revendication 7, dans lequel la couche de diffusion de gaz (5), la structure du canal d'écoulement (620;720) et les distributeurs (63;73) sont reliés en permanence les uns aux autres.

9. L'ensemble de guidage de fluide selon l'une des revendications précédentes, dans lequel les distributeurs (63;73) comprennent au moins l'un du groupe comprenant une mousse à pores ouverts, un motif de trous (730) et un motif de fentes (731).

10. L'ensemble de guidage de fluide selon la revendication 9, dans lequel les distributeurs (63;73) comprennent des trous circulaires, ovales ou angulaires (730).

11. L'ensemble de guidage de fluide selon la revendication 9, dans lequel les distributeurs (63;73) comprennent des fentes (731) droites, courbes ou angulaires.

12. L'ensemble de guidage de fluide selon l'une des revendications précédentes, dans lequel les distributeurs (63;73) sont en métal, en plastique ou en résine.

13. L'ensemble de guidage de fluide selon l'une des revendications précédentes, dans lequel la structure de canal (620;720) comprend des canaux de champ d'écoulement droits, serpentins ou interdigités (62;72).

14. L'ensemble de guidage de fluide selon l'une des revendications 7 à 13, dans lequel la structure du canal (620;720) et les distributeurs sont formés intégralement en une seule pièce.

15. Une structure de champ d'écoulement (6;7) comprenant un ensemble de guidage de fluide selon l'une des revendications précédentes et une plaque séparatrice (60;70) avec une cavité pour recevoir l'ensemble de guidage de fluide, comprenant en outre des collecteurs (90;91) et des canaux de distribution (61;71) pour fournir du gaz aux distributeurs (63;73) à la première extrémité de la structure de canal (620;720) et pour collecter le gaz des distributeurs (63;73) à la deuxième extrémité de la structure de canal (620;720).

16. Une pile à combustible (1) comprenant au moins un assemblage membrane-électrode (2,3) contreventé par deux structures de champ d'écoulement (6;7) selon la revendication 15.

17. La pile à combustible (1) selon la revendication 16, comprenant deux plaques collectrices de courant et deux plaques d'appui, dans laquelle une plaque collectrice de courant est disposée à côté de chaque structure de champ d'écoulement (6;7) et dans laquelle une plaque d'appui est disposée à côté de chaque plaque collectrice de courant.

18. Une méthode de fabrication d'un ensemble de guidage de fluide comprenant les étapes suivantes :
- Fournir une structure de canal (620;720) ;
- Fournir un distributeur poreux (63;73) aux deux extrémités de la structure du canal (620;720) ; et
- Fournir une couche de diffusion de gaz (5) sur la
structure du canal (620;720), dans lequel la hauteur des distributeurs (63;73) est égale à la somme de la hauteur de la couche de diffusion (5) et de la hauteur de la structure du canal (620;720).

19. La méthode selon la revendication 18, comprenant l'étape de :
- Relier de façon permanente la structure du canal (620;720) et les deux distributeurs (63;73) l'un à l'autre.

20. La méthode selon la revendication 19, comprenant les étapes de :
- Relier de façon permanente la couche de diffusion de gaz (5) à la structure du canal (620;720) et aux deux distributeurs (63;73), simultanément ou après la connexion de la structure du canal (620;720) et des distributeurs (63,73).

21. La méthode selon la revendication 19 ou 20, dans laquelle la liaison permanente comprend le pressage ou dans laquelle la liaison permanente comprend le chauffage et le pressage.
